# EUROPEAN PATENT APPLICATION

(11) **EP 4 618 037 A1**
(43) Date of publication of application: **17.09.2025**
(21) Application number: 23907060.0
(22) Date of filing: 19.12.2023
(51) Int. Cl.: G06V 10/774, G06Q 50/02, G06T 7/00, G06T 15/50, G06T 19/00, G06V 10/77, G06V 20/05

(54) **INFORMATION PROCESSING PROGRAM, INFORMATION PROCESSING DEVICE, AND INFORMATION PROCESSING METHOD**

(30) Priority: 22.12.2022 JP 2022205943
(71) Applicant: Softbank Corp., Tokyo 105-7529 (JP)
(72) Inventor: ISHIWAKA, Yuko, Tokyo 105-7529 (JP)
(74) Representative: SSM Sandmair
(86) International application number: PCT/JP2023/045564
(87) International publication number: WO 2024/135700

(57) **Abstract**

An information processing program according to the present application includes a first generation step of generating image data in which estimation target predetermined fish that has a certain characteristic corresponding to an evaluation value is reproduced, by machine learning that is based on a real image that is an image in which the predetermined fish is captured and to which the evaluation value of the predetermined fish is added, a second generation step of generating a Computer Graphics (CG) image in which the predetermined fish is reproduced by computer graphics based on the image data, and an estimation step of estimating an evaluation value of the predetermined fish that appears in an input image based on a model that is trained by using, as training data, a combination of the CG image and the evaluation value that is indicated by a characteristic of the predetermined fish that is reproduced in the CG image.

## Description

### Field

The present invention relates to an information processing program, an information processing apparatus, and an information processing method.

### Background

Conventionally, various kinds of technologies for improving a fish farming technique have been known. For example, a predetermined feature amount that varies in accordance with the number of fish (also referred to as the fish number) is extracted from a captured image in which an image of fish in a fish tank is captured. Further, a technology of checking the extracted feature amount with a trained model that is relational data between a feature amount and the fish number based on machine learning, and detecting the fish number from the trained model is known.

### Citation List

### Patent Literature

Patent Literature 1: Japanese Patent No. 6787471

### Summary

### Technical Problem

However, in the conventional technology as described above, it is only possible to detect the fish number in the fish tank, and it is not always possible to appropriately determine a value of fish.

### Solution to Problem

An information processing program that causes a computer to execute a process comprising: a first generation step of generating image data in which estimation target predetermined fish that has a certain characteristic corresponding to an evaluation value is reproduced, by machine learning that is based on a real image that is an image in which the predetermined fish is captured and to which the evaluation value of the predetermined fish is added; a second generation step of generating a Computer Graphics (CG) image in which the predetermined fish is reproduced by computer graphics based on the image data; and an estimation step of estimating an evaluation value of the predetermined fish that appears in an input image based on a model that is trained by using, as training data, a combination of the CG image and the evaluation value that is indicated by a characteristic of the predetermined fish that is reproduced in the CG image. Brief Description of Drawings
FIG. 1 is an explanatory diagram for explaining the flow of information processing according to one embodiment.
FIG. 2 is a diagram illustrating a configuration example of a system according to one embodiment.
FIG. 3 is a diagram illustrating a configuration example of a first training apparatus.
FIG. 4 is a diagram illustrating a configuration example of a second training apparatus.
FIG. 5 is a diagram illustrating a configuration example of an information processing apparatus.
FIG. 6 is a sequence diagram illustrating the flow of information processing related to estimation of a tasty level.
FIG. 7 is a diagram illustrating an example of operation of a training unit 13b.
FIG. 8 is a diagram illustrating an example of a simulation method according to one embodiment.
FIG. 9 is a diagram illustrating an example of a training method related to generation of a tasty level estimation model.
FIG. 10 is a diagram illustrating an example of a list LT in which tasty levels are displayed in a list manner.
FIG. 11 is a hardware configuration diagram illustrating an example of a computer that implements functions of an information processing apparatus 100. Description of Embodiments

Embodiments of the present invention will be described in detail below based on the drawings. Meanwhile, an information processing program, an information processing apparatus, and an information processing method according to the present disclosure are not limited by the embodiments below. Further, in the embodiments below, the same components are denoted by the same reference symbols, and repeated explanation will be omitted.

### (Embodiment)

### [1. Introduction]

In the current situation, a human being (for example, a skilled person) determines a feature of landed fish depending on intuition and experience, and determines a price in accordance with a result of the determination. For example, a feature, such as a shape, a size, a weight, or a fat percentage, is visually determined, and a human being determines a price based on a result of the determination (that is, judgement); however, there is a problem in that a criterion for selecting the price is ambiguous.

In particular, it is not preferable to determine a price by judgment with respect to fish (for example, sea bream, yellowtail, tuna, or the like) that has a large fishery value, that is popularly farmed, and that is generally considered as high-class fish.

Further, there is another problem in that price determination after landing of fish does not fit for the farming site that aims at raising fish to a valuable state.

Therefore, the present invention proposes a method of appropriately determining a value of fish without depending on intuition and experience of a human being. For example, the present invention proposes a method of appropriately determining a value even when fish are in the water (for example, in a fish tank).

For example, in the proposed technology of the present invention, an evaluation value of fish is automatically determined from a video (for example, an underwater video) by using an Artificial Intelligence (AI) technology. According to the proposed technology of the present invention as described above, for example, an aquaculture producer is able to easily recognize how much evaluation value may be obtained at current growth of fish in a fish tank, so that it is possible to estimate a catch of the fish or appropriately perform examination about optimization of feeding.

In other words, according to the proposed technology of the present invention, it is possible to contribute to improvement in efficiency of the aquaculture industry. Furthermore, according to the proposed technology of the present invention, it may be possible to create a new determination index for a fish value without depending on intuition and experience of a human being.

The proposed technology of the present invention (described as "information processing according to one embodiment") will be described in detail below with reference to the drawings. Further, in the information processing according to one embodiment, an evaluation value of fish will be explained as a "tasty level" (may also be referred to as a deliciousness level).

Furthermore, the information processing according to one embodiment is applicable to not only farming target fish, but also all kinds of living things that live in rivers and seas; however, it is preferable to apply the information processing to a living thing which has a value above a certain level (for example, popular as a food), but for which a value determination criterion is not clearly determined.

### [2. Flow of information processing]

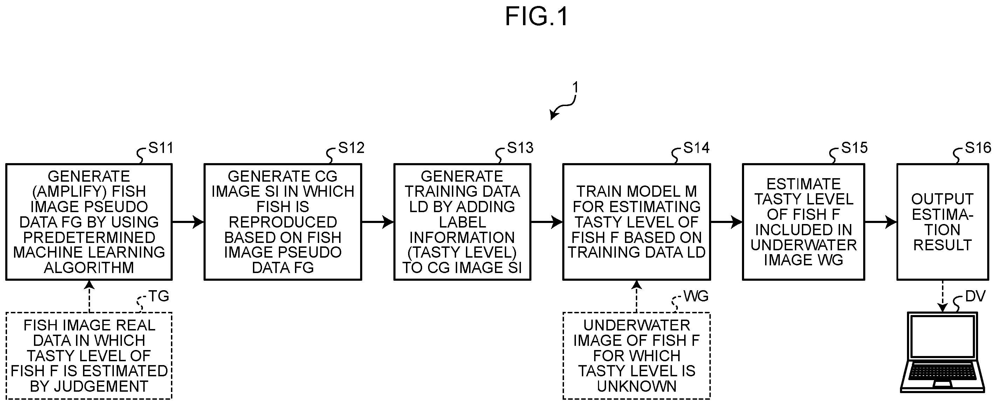

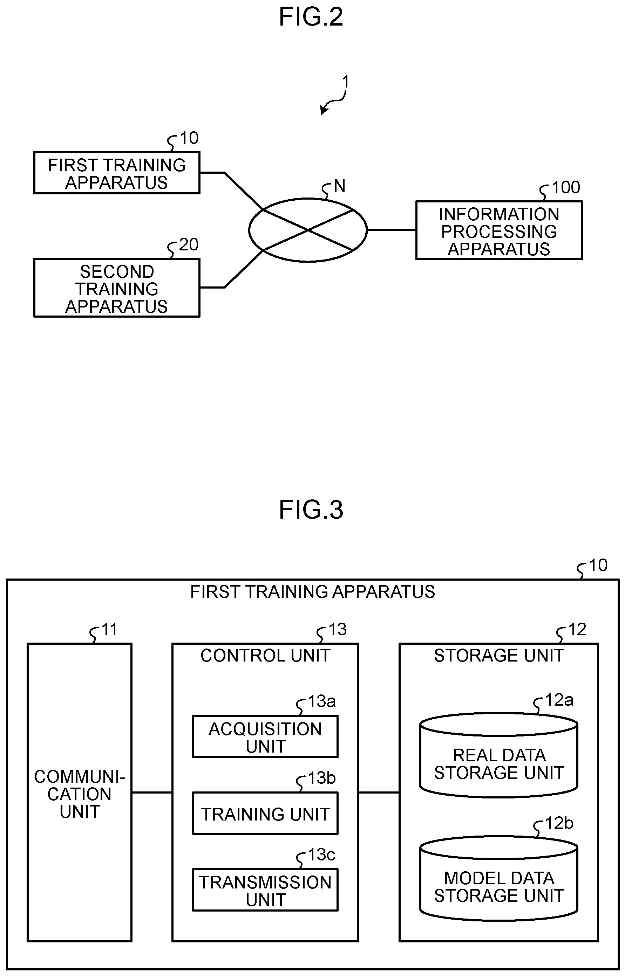

The information processing according to one embodiment may be implemented by a system 1 (FIG. 2). A flow of the information processing that is performed by the system 1 will be described below. FIG. 1 is a diagram for explaining the flow of the information processing according to one embodiment.

First, the system 1 generates pseudo image data (hereinafter, described as "fish image pseudo data") FG of fish F by using a predetermined machine learning algorithm (Step S11). The predetermined machine learning algorithm described herein may be a machine learning network that includes a generative model for generating pseudo image data, that is, Generative adversarial networks (GANs).

At Step S11, the GANs are trained by using image data (hereinafter, described as "fish image real data") TG in which an image of the fish F is captured as training data. Here, a tasty level of the fish F that is estimated by judgement is added as meta information to the fish image real data TG. Therefore, for example, the GANs are trained with respect to a feature such that a difference from a feature (for example, a color, a shape, a size, a weight, a fat percentage, or the like of the fish F) corresponding to the tasty level of the fish F that appears in the fish image real data TG is minimized, and the GANs are updated.

For example, an ideal result is to obtain the GANs that are trained with respect to a strong feature expression that represents a characteristic of the training data, and the system 1 generates the fish image pseudo data FG by using the GANs that are updated until the ideal result is obtained. As a result, a large number of pieces of the fish image pseudo data FG are generated from the fish image real data TG, so that the image data of the fish F is amplified. Meanwhile, the fish image pseudo data FG is generated from the fish image real data TG to which the tasty level is added, and therefore, it may be possible to add the tasty level, as meta information, to the fish image pseudo data FG.

Subsequently, the system 1 generates a Computer Graphics (CG) image SI in which the fish F is reproduced by computer graphics based on the fish image pseudo data FG (Step S12). For example, the system 1 generates the CG image SI in which a simulation result of an underwater image (underwater video) of the fish F is reproduced. In view of the above, the CG image SI may be referred to as a simulation image of the fish F.

For example, the system 1 may generate a three-dimensional model for the fish F based on the fish image pseudo data FG, perform a predetermined simulation with respect to the generated three-dimensional model, and generate the CG image SI in which a simulation result is reproduced by computer graphics.

For example, the system 1 may perform a simulation (Boids simulation) of group motion based on Boids with a different number of fish. Here, Boids indicates a group of objects (Boids) each of which represents individual fish and which move like a school of fish. Further, Boids is a name of a program that enables a simulation of group motion by only setting three rules of cohesion, separation, and alignment.

Of the three rules in Boids, "cohesion" indicates a force of the individuals to approach each other so as not to separate from each other, "separation" indicates a force of the individuals to separate from each other so as to avoid collision, and "alignment" indicates a force to align a direction in which the group moves. By a sum of the three forces as described above, a motion of an individual is determined. For each of the three forces, a magnitude of force, a range of force, and an angle can be set as parameters (hereinafter, also referred to as Boids parameters). For example, the Boids parameters are determined by a size of a space in which the group is present, sizes of the individuals, and a density of the individuals.

Here, the system 1 may simulate how the school of the fish F looks underwater by further using, as the parameters, a color of the fish F with a light attenuation rate according to a water depth taken into account, a degree of reflection of light from the fish F according to the light attenuation rate according to the water depth, or the like. More specifically, the system 1 may simulate how the school of the fish F looks as an underwater image.

An example of this point will be described. For example, landed seabream looks bright pale pink on land, but in a video in which an underwater state is captured by an underwater camera or the like, at least the pale pink may disappear (for example, looks blackish). Therefore, the system 1 simulates how the school of the fish F looks as an underwater image by applying various kinds of parameters as described above to a three-dimensional model for the fish F, which is generated based on the fish image pseudo data FG. Further, the system 1 reproduces a simulation result of the underwater image of the school of the fish F by computer graphics, and generates the CG image SI of the underwater image.

In this manner, the CG image SI is generated from the fish image pseudo data FG to which the tasty level is added. Therefore, when generating the CG image SI, the system 1 may add, as meta information, a tasty level to each of the fish F (for example, the fish F based on the three-dimensional model) that are included in the CG image SI.

As a result, the system 1 subsequently generates training data LD by adding, as label information, the tasty level that is indicated by a feature of the fish F (the tasty level that is added as the meta information at Step S12) to the CG image SI of each of the fish F that are included in an underwater simulation image that is represented by the CG image SI (Step S13). For example, the system 1 may adopt, as a single piece of the training data LD, a combination of the CG image SI of the single fish F and label information in which a tasty level that is indicated by a feature of the single fish F is adopted as a correct answer, and generate a group of pieces of the training data LD corresponding to all of the fish F.

Subsequently, the system 1 generates a model M for estimating the tasty level of the fish F based on the training data LD that is generated at Step S13 (Step S14). For example, the system 1 trains the model M so as to estimate the tasty level of the fish F from the underwater image of the fish F.

For example, the system 1 performs machine learning (supervised learning) using the training data LD for a deep neural network (DNN). Specifically, the system 1 trains the DNN (the model M) such that when an input image is input to the DNN (the model M), the DNN (the model M) outputs the tasty level of the fish F that is included in the input image, and generates the trained DNN (the model M). The input image described herein may be an underwater image in which a state of the fish F swimming underwater is captured.

For example, as illustrated in FIG. 1, when an underwater image WF of the fish F for which the tasty level is unknown is given, the system 1 inputs the underwater image WF to the trained model M and estimates the tasty level of the fish F that is included in the underwater image WG based on output information that is given by the model M (Step S15). For example, the system 1 may extract image data of the fish F from the underwater image WG, and estimate the tasty level for each piece of the extracted image data.

Further, the system 1 outputs an estimation result of the tasty level of the fish F to a device DV (Step S16). For example, the system 1 may output a list in which tasty levels as the estimation results are displayed in a list manner for all of the fish F that are included in the underwater image WG. As another example, the system 1 may aggregate the tasty levels as the estimation results and output a distribution of the tasty levels. For example, the system 1 may output a percentage distribution in the underwater image WG such that the fish F with the tasty level of "0.0" to "smaller than 1.0" is "2%", the fish F with the tasty level of "1.0" to "smaller than 2.1" is "6%", ..., and the fish F with the tasty level "equal to or larger than 4.0" is "80%".

An overview of the information processing according to one embodiment has been described above with reference to FIG. 1. For example, a human being is able to estimate the tasty level of the landed fish F by judgement, but it is difficult to estimate the tasty level of the fish F that is present underwater. Therefore, although it may be possible to adopt a method of using the fish image real data TG described in FIG. 1 as training data, in this method, the number of pieces of the training data is insufficient, and there is room for improvement in increasing estimation accuracy of the model. In contrast, according to the information processing of one embodiment, the image data of the fish F is amplified based on the fish image real data TG, and it is further possible to amplify by a simulation, even image data in which a state of the fish F that is present underwater is captured. Therefore, in the information processing according to one embodiment, it is possible to generate the model M with high estimation accuracy, so that it is possible to automatically and accurately estimate the tasty level without depending on intuition and experience of a human being. Further, as a result, it is possible to achieve a new determination index about a value of fish, so that it is possible to contribute to the aquaculture industry, for example.

### [3. System configuration]

A configuration of the system 1 will be described below. FIG. 2 is a diagram illustrating the configuration example of the system 1 according to one embodiment. As illustrated in FIG. 2, the system 1 may include a first training apparatus 10, a second training apparatus 20, and an information processing apparatus 100. Further, the first training apparatus 10, the second training apparatus 20, and the information processing apparatus 100 may be communicably connected to each other via a network N in a wired or wireless manner.

The first training apparatus 10 performs machine learning based on the fish image real data TG for which the tasty level of the fish F is estimated. Specifically, the first training apparatus 10 performs training with respect to a feature such that a difference from a feature (for example, a color, a shape, a size, a weight, a fat percentage, or the like of the fish F) corresponding to the tasty level that is a judgement result with respect to the fish F and that is indicated by the fish image real data TG is minimized, and updates the GANs.

The second training apparatus 20 generates the model M for estimating the tasty level of the fish F based on the training data LD. For example, the second training apparatus 20 performs machine learning (supervised learning) using the training data LD on the model M that is a CNN-type DNN, and generates the model M for estimating the tasty level of the fish F that is included in the input image.

The information processing apparatus 100 is a cloud computer (server) that operates in accordance with the information processing program according to one embodiment. For example, the information processing apparatus 100 generates the fish image pseudo data FG by using the GANs that are updated by the first training apparatus 10. Further, the information processing apparatus 100 generates the CG image SI in which the fish F is reproduced, based on the fish image pseudo data FG.

Generation of the training data LD based on the CG image SI and generation of the model M using the training data LD are performed by the second training apparatus 20. Therefore, the information processing apparatus 100 inputs the underwater image WF of the fish F for which the tasty level is unknown to the trained model M, and estimates the tasty level of the fish F that is included in the underwater image WG based on output information that is given by the model M.

Meanwhile, in the present embodiment, the GANs are described as an example of the machine learning model for amplifying the image data of the fish F, but the model is not limited to the GANs as long as the model is able to generate pseudo image data, for example.

Furthermore, the model M may be trained not only for estimating the tasty level of the fish F from the underwater image of the fish F, but also for estimating the tasty level of the fish F from image data of the fish F that is landed from water. In this case, the fish image real data TG for which the tasty level of the fish F is estimated by judgement may be used as the training data LD.

### [4. Functional configuration]

Configuration examples of the first training apparatus 10, the first training apparatus 30, and the information processing apparatus 100 will be described below.

### [4-1. First training apparatus]

First, a configuration example of the first training apparatus 10 will be described. FIG. 3 is a diagram illustrating the configuration example of the first training apparatus 10. As illustrated in FIG. 3, the first training apparatus 10 includes a communication unit 11, a storage unit 12, and a control unit 13.

### (Communication unit 11)

The communication unit 11 is implemented by, for example, a Network Interface Card (NIC) or the like. Further, the communication unit 11 is connected to a network N in a wired or wireless manner, and transmits and receives information to and from, for example, the second training apparatus 20 and the information processing apparatus 100.

### (Storage unit 12)

The storage unit 12 is implemented by, for example, a semiconductor memory device, such as a Random Access Memory (RAM) or a flash memory, or a storage device, such as a hard disk or an optical disk. The storage unit 12 may store therein, for example, data or a program that is related to the information processing according to one embodiment. Further, in the example illustrated in FIG. 3, the storage unit 12 may include a real data storage unit 12a and a model data storage unit 12b.

### (Real data storage unit 12a)

The real data storage unit 12a stores therein the fish image real data TG in which an image of the fish F for which the tasty level is estimated by judgement is captured. The tasty level may be added, as meta information, to the fish image real data TG.

### (Model data storage unit 12b)

The model data storage unit 12b stores therein information on a machine learning algorithm (for example, GANs) that is trained with respect to a feature such that a difference from a feature (for example, a color, a shape, a size, a weight, a fat percentage, or the like of the fish F) corresponding to the tasty level of the fish F that is captured in the fish image real data TG is minimized, and that is updated.

### (Control unit 13)

The control unit 13 is implemented by causing a Central Processing Unit (CPU), a Micro Processing Unit (MPU), or the like to execute various kinds of programs (for example, the information processing program according to one embodiment) that are stored in a storage device inside the first training apparatus 10 by using a RAM as a work area. Further, the control unit 13 is implemented by, for example, an integrated circuit, such as an Application Specific Integrated Circuit (ASIC) or a Field Programmable Gate Array (FPGA).

As illustrated in FIG. 3, the control unit 13 includes an acquisition unit 13a, a training unit 13b, and a transmission unit 13c, and implements or executes functions or operation of information processing as described below. Meanwhile, an internal configuration of the control unit 13 is not limited to the configuration as illustrated in FIG. 3, and it is possible to adopt a different configuration as long as the information processing to be described below is performed. Further, a connection relationship of the processing units that are included in the control unit 13 is not limited to the connection relationship as illustrated in FIG. 3, and it is possible to adopt a different connection relationship.

### (Acquisition unit 13a)

The acquisition unit 13a acquires the fish image real data TG. For example, the acquisition unit 13a may acquire the fish image real data TG from the device DV (FIG. 1) that is owned by a user, and store the fish image real data TG in the real data storage unit 12a.

Meanwhile, the device DV is an information processing terminal that is used by the user. The device DV is implemented by, for example, a smartphone, a tablet terminal, a notebook Personal Computer (PC), a desktop PC, a mobile phone, a Personal Digital Assistant (PDA), or the like. Further, the user described herein may be a producer, that is, an aquaculture producer, of the fish F.

### (Training unit 13b)

The training unit 13b trains the GANs by using the fish image real data TG as the training data. In the training by the training unit 13b, the training is performed with respect to a feature such that a difference from a feature (for example, a color, a shape, a size, a weight, a fat percentage, or the like of the fish F) corresponding to the tasty level of the fish F that is captured in the fish image real data TG is minimized, and the GANs are updated. An ideal result is to obtain the GANs that are trained with respect to a strong feature expression that represents a characteristic of the fish that is indicated by the fish image real data TG, and the GANs that are updated until the ideal result is obtained are stored in the model data storage unit 12b.

### (Transmission unit 13c)

The transmission unit 13c transmits the updated GANs to the information processing apparatus 100. The training unit 13b may update the GANs periodically, and the transmission unit 13c may transmit the latest GANs to the information processing apparatus 100 every time the update is performed.

### [4-2. Second training apparatus]

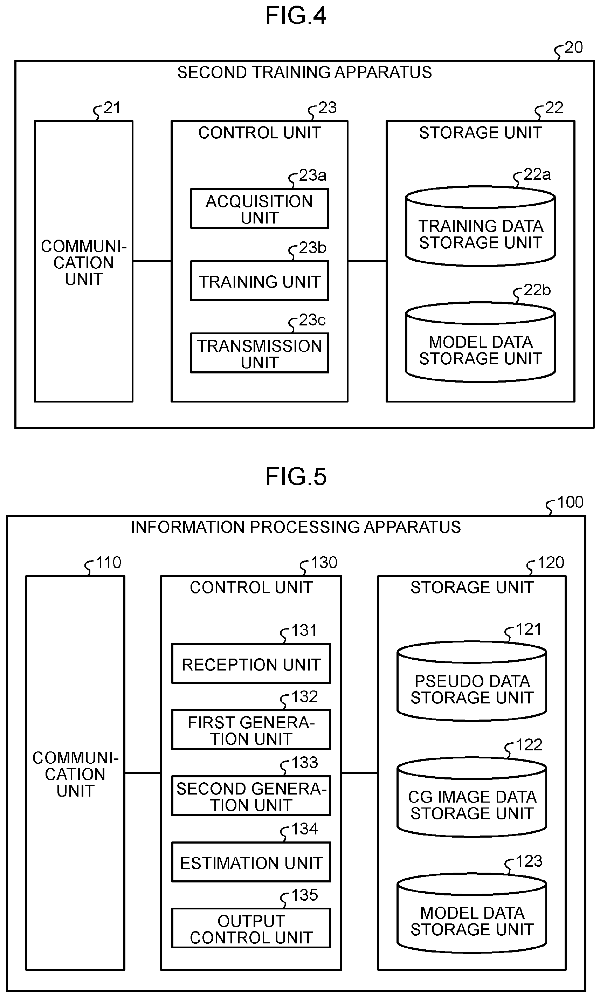

A configuration example of the second training apparatus 20 will be described below. FIG. 4 is a diagram illustrating the configuration example of the second training apparatus 20. As illustrated in FIG. 4, the second training apparatus 20 includes a communication unit 21, a storage unit 22, and a control unit 23.

### (Communication unit 21)

The communication unit 21 is implemented by, for example, a NIC or the like. Further, the communication unit 21 is connected to the network N in a wired or wireless manner, and transmits and receives information to and from, for example, the first training apparatus 10 and the information processing apparatus 100.

### (Storage unit 22)

The storage unit 22 is implemented by, for example, a semiconductor memory device, such as a RAM or a flash memory, or a storage device, such as a hard disk or an optical disk. The storage unit 22 may store therein, for example, data or a program that is related to the information processing according to one embodiment. Further, in the example illustrated in FIG. 4, the storage unit 22 may include a training data storage unit 22a and a model data storage unit 22b.

### (Training data storage unit 22a)

The training data storage unit 22a stores therein, as the training data LD, a combination of the CG image SI that is generated by the information processing apparatus 100 and an evaluation value that is indicated by the characteristic of the fish F that is reproduced in the CG image SI.

### (Model data storage unit 22b)

The model data storage unit 22b stores therein the model M that is generated based on the training data LD and that estimates the tasty level of the fish F.

### (Control unit 23)

The control unit 23 is implemented by causing a CPU, an MPU, or the like to execute various kinds of programs (for example, the information processing program according to one embodiment) that are stored in a storage device inside the second training apparatus 20 by using a RAM as a work area. Further, the control unit 23 is implemented by, for example, an integrated circuit, such as an ASIC or an FPGA.

As illustrated in FIG. 4, the control unit 23 includes an acquisition unit 23a, a training unit 23b, and a transmission unit 23c, and implements or executes functions or operation of information processing as described below. Meanwhile, an internal configuration of the control unit 23 is not limited to the configuration as illustrated in FIG. 4, and it is possible to adopt a different configuration as long as the information processing to be described below is performed. Further, a connection relationship of the processing units that are included in the control unit 23 is not limited to the connection relationship as illustrated in FIG. 4, and it is possible to adopt a different connection relationship.

### (Acquisition unit 23a)

The acquisition unit 23a acquires the CG image SI. For example, the acquisition unit 23a may acquire the CG image SI that is transmitted by the information processing apparatus 100, and store the CG image SI in the training data storage unit 22a.

### (Training unit 23b)

The training unit 23b generates the model M for estimating the tasty level of the fish F based on the training data LD. For example, the training unit 23b trains the model M based on the training data LD so as to estimate the tasty level of the fish F included in the underwater image when the underwater image of the fish F is given as input.

### (Transmission unit 23c)

The transmission unit 23c transmits the trained model M to the information processing apparatus 100. The training unit 23b may periodically update the model M, and the transmission unit 23c may transmit the latest model M to the information processing apparatus 100 every time the model M is updated.

### [4-3. Information processing apparatus]

A configuration example of the information processing apparatus 100 will be described below. FIG. 5 is a diagram illustrating a configuration example of the information processing apparatus 100. As illustrated in FIG. 5, the information processing apparatus 100 includes a communication unit 110, a storage unit 120, and a control unit 130.

### (Communication unit 110)

The communication unit 110 is implemented by, for example, a NIC or the like. Further, the communication unit 110 is connected to the network N in a wired or wireless manner, and transmits and receives information to and from, for example, the first training apparatus 10 and the second training apparatus 20.

### (Storage unit 120)

The storage unit 120 is implemented by, for example, a semiconductor memory device, such as a RAM or a flash memory, or a storage device, such as a hard disk or an optical disk. The storage unit 120 may store therein, for example, data or a program that is related to the information processing according to one embodiment. Further, in the example illustrated in FIG. 5, the storage unit 120 may include a pseudo data storage unit 121, a CG image data storage unit 122, and a model data storage unit 123.

### (Pseudo data storage unit 121)

The pseudo data storage unit 121 stores therein the fish image pseudo data FG that is generated by using the GANs that are updated based on the fish image real data TG.

### (CG image data storage unit 122)

The CG image data storage unit 122 stores therein the CG image SI in which the fish F is reproduced based on the fish image pseudo data FG by computer graphics.

### (Control unit 130)

The control unit 130 is implemented by causing a CPU, an MPU, or the like to execute various kinds of programs (for example, the information processing program according to one embodiment) that are stored in a storage device inside the information processing apparatus 100 by using a RAM as a work area. Further, the control unit 130 is implemented by, for example, an integrated circuit, such as an ASIC or an FPGA.

As illustrated in FIG. 5, the control unit 130 includes a reception unit 131, a first generation unit 132, a second generation unit 133, an estimation unit 134, and an output control unit 135, and implements or executes functions or operation of information processing as described below. Meanwhile, an internal configuration of the control unit 130 is not limited to the configuration as illustrated in FIG. 5, and it is possible to adopt a different configuration as long as the information processing to be described below is performed. Further, a connection relationship of the processing units that are included in the control unit 130 is not limited to the connection relationship as illustrated in FIG. 5, and it is possible to adopt a different connection relationship.

### (Reception unit 131)

The reception unit 131 receives information on a result of machine learning. For example, the reception unit 131 may receive the GANs that are transmitted by the first training apparatus 10 and store the GANs in the model data storage unit 123. Further, the reception unit 131 may receive the model M that is transmitted by the second training apparatus 20 and store the model M in the model data storage unit 123.

### (First generation unit 132)

The first generation unit 132 generates the fish image pseudo data FG in which the fish F that has the characteristic corresponding to the evaluation value is reproduced, by using a result of the machine learning (that is, the GANs) based on the fish image real data TG that is an image in which the estimation target fish F is captured and that is an image to which the evaluation value of the fish F is added. As described above, the GANs are models that are trained with respect to a feature such that, as a feature corresponding to the evaluation value of the fish F that appears in the fish image real data TG, a difference from any of a color, a shape, a size, a weight, and a fat percentage of the fish F is minimized.

### (Second generation unit 133)

The second generation unit 133 generates the CG image SI in which the fish F is reproduced by computer graphics based on the fish image pseudo data FG. For example, the second generation unit 133 generates the CG image SI in which a simulation result of how the fish F looks underwater (how the fish F looks as an underwater image) is reproduced by computer graphics, with respect to the three-dimensional model that is for the fish F and that is based on the fish image pseudo data FG. More specifically, the second generation unit 133 generates the CG image Si in which a simulation result of a video of the fish F that is present underwater is reproduced by computer graphics based on the parameter information. Here, the parameter information may be a color of the fish F with a light attenuation rate according to a water depth taken into account or a degree of reflection of light from the fish F.

### (Estimation unit 134)

The estimation unit 134 estimates the evaluation value of the fish F that appears in the input image, based on the model M that is trained by using, as the training data LD, a combination of the CG image SI and an evaluation value that is indicated by the characteristic of the fish F that is reproduced by the CG image SI. For example, the estimation unit 134 inputs, as an input image, the underwater image WG in which a state of the fish F swimming underwater is captured to the model M, and estimate the evaluation value of each of the fish F that are included in the underwater image WG based on output information that is given by the model M.

### (Output control unit 135)

The output control unit 135 outputs the tasty level that is estimated by the estimation unit 134 to the device DV. For example, the output control unit 135 may output a list in which tasty levels are displayed in a list manner for all of the fish F that are included in the underwater image WG. As another example, the output control unit 135 may output distribution information on the tasty level.

### [5. Estimation method]

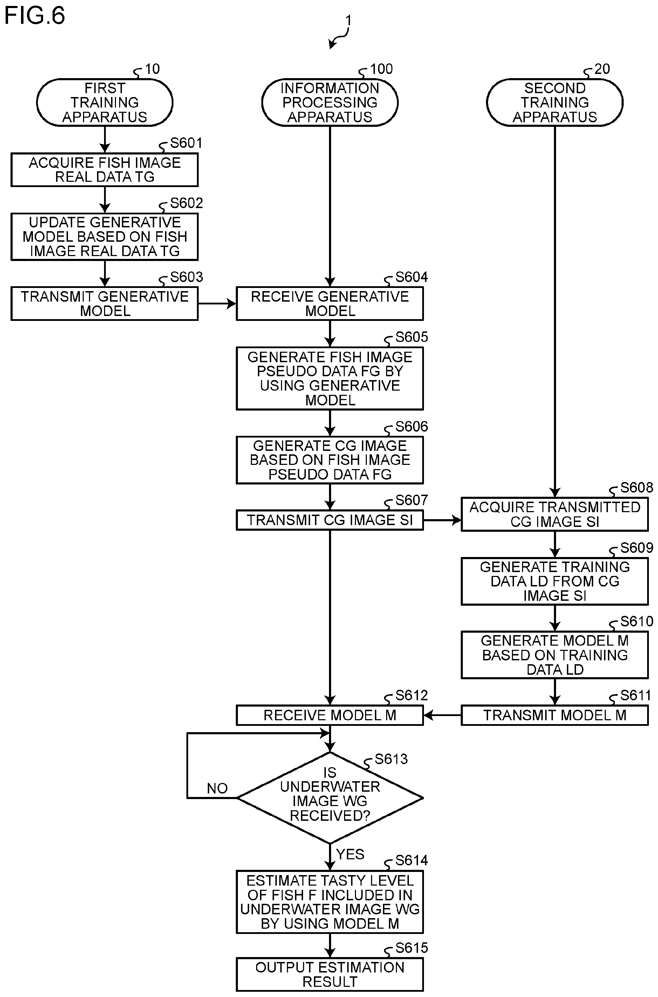

A method of estimating the tasty level that is implemented by the system 1 will be described below. FIG. 6 is a sequence diagram illustrating the flow of information processing related to estimation of the tasty level.

First, the acquisition unit 13a of the first training apparatus 10 acquires the fish image real data TG (Step S601). For example, the acquisition unit 13a acquires the fish image real data TG that is transmitted by the device DV.

The training unit 13b performs machine learning using the fish image real data TG as training data on a generative model (hereinafter, referred to as "GANs"), and updates the GANs until an ideal value is obtained (Step S602).

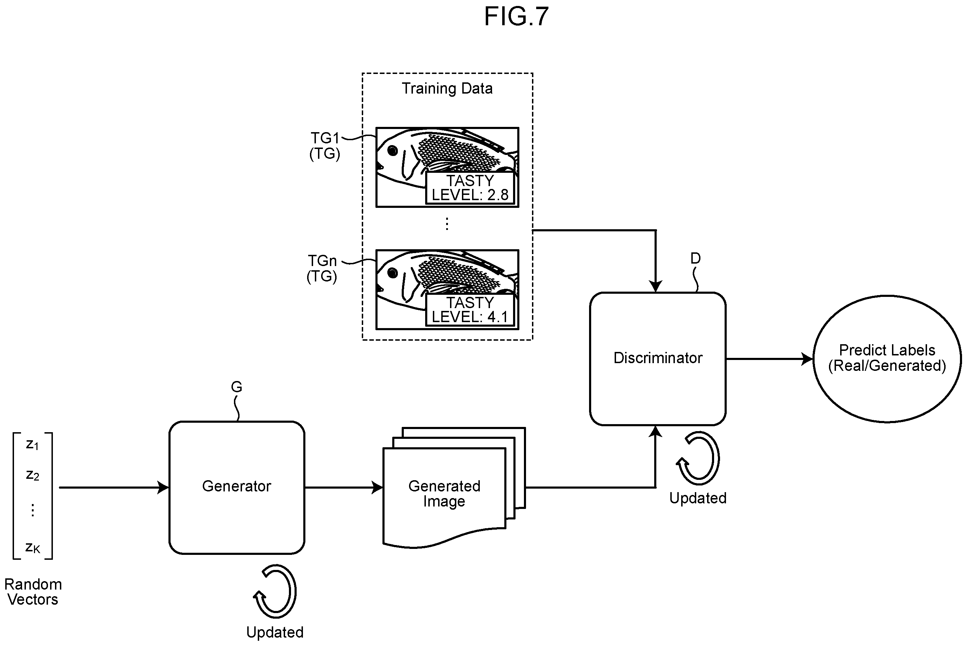

An example of operation of the training unit 13b will be described below with reference to FIG. 7. FIG. 7 is a diagram illustrating an example of operation of the training unit 13b. In FIG. 7, a method in which the training unit 13b performs training on the GANs and generate an image will be described. The GANs are a kind of a deep learning network, and implements generation of image data that has a characteristic similar to input real data.

As illustrated in FIG. 7, the GANs include two networks, such as a Generator G and a Discriminator D.

The generator G generates image data with a structure that is similar to the training data when vectors (Random Vectors) with random values (latent input) are given as input. In the present embodiment, the fish image real data TG is given as the training data. FIG. 7 illustrates an example in which fish image real data TG1, ..., fish image real data TGn are given as a plurality of pieces of the fish image real data TG. Further, in the example illustrated in FIG. 7, the example is illustrated in which a tasty level of "2.8" is added as meta information to the fish image real data TG1 and a tasty level of "4.1" is added as meta information to the fish image real data TGn.

The discriminator D, when data (Predict Labels) that include both of observed values of the fish image real data TG (training data) and image data that is generated by the generator G are given, attempts to classify whether the observed values are "real" (true) or "generated" (false).

For example, the training unit 13b, by giving the vectors of the random values as input to the generator G, simultaneously trains both of networks of the generator G and the discriminator D, and maximizes performance of both of the networks.

Specifically, the training unit 13b trains the generator G and causes the generator G to generate image data that deceives the discriminator D. Further, the training unit 13b trains the discriminator D and causes the discriminator D to discriminate the fish image real data TG from generated data that is generated by the generator G.

Here, to optimize the performance of the generator G, a loss of the discriminator D is maximized when the generated data that is generated by the generator G is given. In other words, a purpose of the generator G is to generate image data that is classified as "real" by the discriminator D. In contrast, to optimize the performance of the discriminator D, a loss of the discriminator D is minimized when both of the fish image real data TG and the generated data are given. In other words, a purpose of the discriminator D is "not to be deceived" by the generator G. An ideal result in the training of the GANs is to obtain the generator G that generates image data that looks real as described above and the discriminator D that is trained with respect to a strong feature expression that represents a characteristic of the training data.

Referring back to FIG. 6, the generative model (GANs) updated until an ideal result is obtained is transmitted to the information processing apparatus 100 by the transmission unit 13c (Step S603).

The reception unit 131 of the information processing apparatus 100 receives the generative model (GANs) transmitted by the transmission unit 13c (Step S604).

Further, the first generation unit 132 generates the fish image pseudo data FG by using the generative model (GANs) (Step S605). Meanwhile, the fish image pseudo data FG is generated by the GANs that are trained with respect to a feature such that the tasty level that is added to the fish image real data TG is obtained. Therefore, the same tasty level as the tasty level that is added to the fish image real data TG may be added to meta information to the fish image pseudo data FG.

Subsequently, the second generation unit 133 generates the CG image SI in which the fish F is reproduced by computer graphics based on the fish image pseudo data FG (Step S606). For example, the second generation unit 133 generates the CG image SI in which a simulation result of the underwater image of the fish F is reproduced.

For example, the second generation unit 133 generates the three-dimensional model for the fish F based on the fish image pseudo data FG, and performs a simulation on the generated three-dimensional model by applying predetermined parameter information. For example, the second generation unit 133 performs a simulation by using the predetermined parameter information about how the fish F looks in the underwater image in which a state of the fish F swimming underwater is captured. Further, the second generation unit 133 generates the CG image SI in which the simulation result is reproduced by computer graphics.

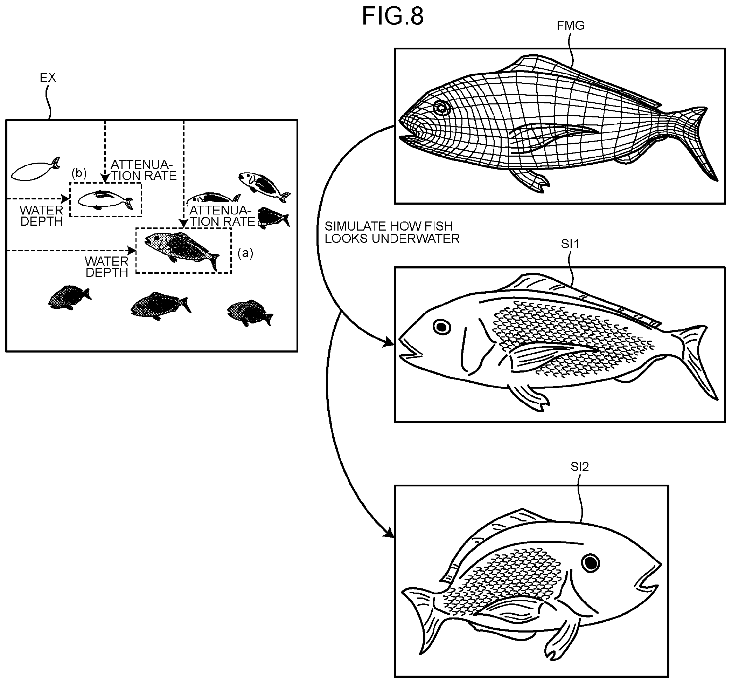

A simulation that is performed by the second generation unit 133 will be described below with reference to FIG. 8. FIG. 8 is a diagram illustrating an example of the simulation method according to one embodiment. In FIG. 8, a case is illustrated in which a simulation is performed by applying the predetermined parameter information to a three-dimensional model FMG for the fish F, which is generated based on the fish image pseudo data FG. Here, the predetermined parameter information is a color of the fish F with a light attenuation rate according to a water depth taken into account or a degree of reflection of light from the fish F according to the light attenuation rate according to the water depth.

FIG. 8 illustrates an underwater image EX as one example of the underwater image in which the state of the fish F swimming underwater is captured, and fish F(a) and fish F(b) are picked up. The fish F(a) and the fish F(b) are located at different water depths, and therefore, light attenuation rates are different. Therefore, as illustrated in the underwater image EX, the colors and the degrees of light reflection are different between the fish F(a) and the fish F(b). Therefore, the second generation unit 133 simulates, by using the three-dimensional model FMG for the fish F, a color of the fish F according to the water depth in the underwater image EX in which the state of the fish F swimming underwater is captured and a degree of reflection of light from the fish F according to the water depth.

In other words, the second generation unit 133 simulates a change of the color of the fish F on the land in the underwater image EX at a specific water depth based on the light attenuation rate corresponding to the specific water depth, and simulates a change of the degree of reflection of light from the fish F in the underwater image EX at the specific water depth. FIG. 8 illustrates an example in which the second generation unit 133 generates a CG image SI1 as one example of the CG image SI based on the simulation result. Further, the second generation unit 133 may generate various kinds of CG images SI in which the pose of the fish F or the orientation of the fish F are changed based on the CG image SI1. FIG. 8 illustrates an example in which the second generation unit 133 further generates a CG image SI2 in which the fish F is further captured from a different orientation based on the CG image SI1.

Furthermore, the second generation unit 133 may further increase the number of the CG images SI by performing Data Augmentation on the CG image SI1 or the CG image SI2. Moreover, the second generation unit 133 generates the CG image SI from the fish image pseudo data FG to which the tasty level is added, and therefore, it may be possible to add the tasty level as meta information to each of the fish F that are included in the CG image SI when the CG image SI is generated.

Referring back to FIG. 6, the CG image SI is transmitted to the second training apparatus 20 by the second generation unit 133 (Step S607).

The acquisition unit 23a of the second training apparatus 20 acquires the CG image SI (Step S608). Specifically, the acquisition unit 23a acquires the CG image SI that is transmitted by the information processing apparatus 100.

The training unit 23b generates the training data LD from the CG image SI (Step S609). For example, the training unit 23 may generate the training data LD by adding, as the label information, the tasty level (the tasty level that is added as the meta information) that is indicated by the characteristic of the fish F to the CG image SI of each of the fish F that are included in an underwater simulation image that is indicated by the CG image SI. For example, the training unit 23b may generate a group of pieces of the training data LD corresponding to all of the fish F by adopting, as the single training data LD, a combination of the CG image SI of the single fish F and label information in which the tasty level that is indicated by the characteristic of the fish F is adopted as a correct answer.

Furthermore, the training unit 23b generates the model M for estimating the tasty level of the fish F based on the training data LD (Step S610). For example, the training unit 23b trains the model M so as to estimate the tasty level of the fish F from the underwater image of the fish F based on the training data LD.

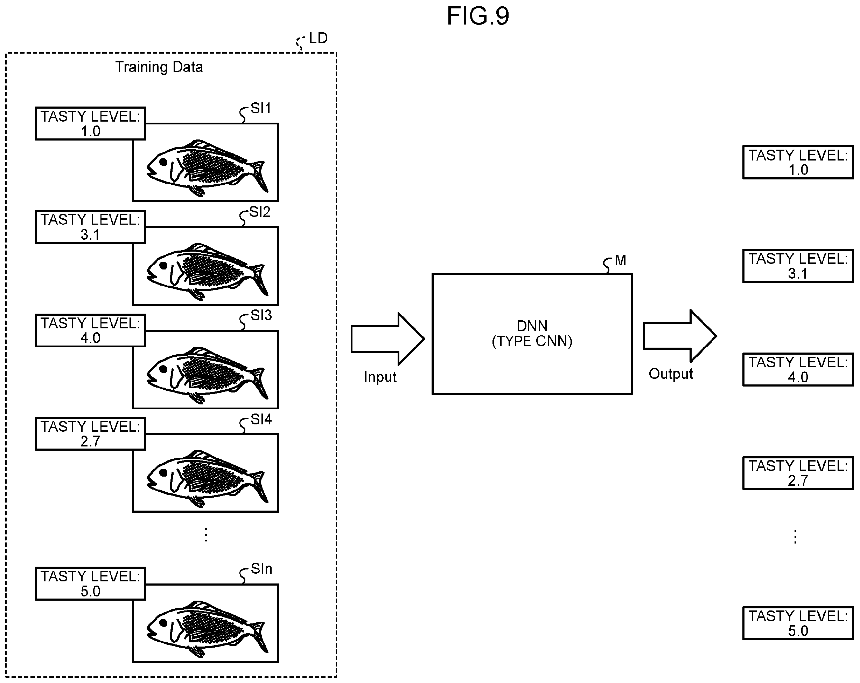

A method of training the model M will be described below with reference to FIG. 9. FIG. 9 is a diagram illustrating an example of the training method related to generation of a tasty level estimation model. FIG. 9 illustrates a case in which the model M is generated by training in which n CG images SI to which the tasty levels are added as correct answer labels are used as the training data LD.

As illustrated in FIG. 9, the model M may be a deep neural network (DNN) that performs machine learning (supervised learning) using the training data LD, and is trained with respect to a relationship between the characteristic of the fish F indicated by the CG image SI and the correct answer label. As a result, the model M is trained so as to estimate the tasty level of the fish F that are included in the input image.

In FIG. 9, a group of the training data LD that includes the CG image SI1 to which a tasty level of "1.0" is added as the correct answer label, a CG image SI2 to which a tasty level of "3.1" is added as the correct answer label, a CG image SI3 to which a tasty level of "4.0" is added as the correct answer label, a CG image SI4 to which a tasty level of "2.7" is added as the correct answer label, ..., and the CG image SIn to which a tasty level of "5.0" is added as the correct answer label is input to the model M. In this case, the model M is trained with respect to a relationship so as to estimate the tasty level of "1.0", the tasty level of "3.1", the tasty level of "4.0", the tasty level of "2.7", ..., the tasty level of "5.0", or the like with respect to the fish F included in an input image when the input image (for example, an underwater image in which a state of the fish F swimming underwater is captured) is given.

Referring back to FIG. 6, the trained model M is transmitted to the information processing apparatus 100 by the transmission unit 23c (Step S611).

The reception unit 131 receives the model M that is transmitted by the transmission unit 23c (Step S612).

In this state, the estimation unit 134 determines whether or not the underwater image WG of the fish F is received (Step S613). While the underwater image WG is not received (Step S613; No), the estimation unit 134 waits until it is determined that the underwater image WG is received.

In contrast, when the underwater image WG is received (Step S613; Yes), the estimation unit 134 inputs the underwater image WF to the trained model M, and estimates the tasty level of the fish F included in the underwater image WG based on the output information that is given by the model M (Step S614).

The output control unit 135 causes the device DV to output information on an estimation result of the tasty level (Step S615). For example, the output control unit 135 may generate a list LT in which the tasty levels as the estimation results are displayed in a list manner for all of the fish F that are included in the underwater image WG, and cause the device DV to output the list LT.

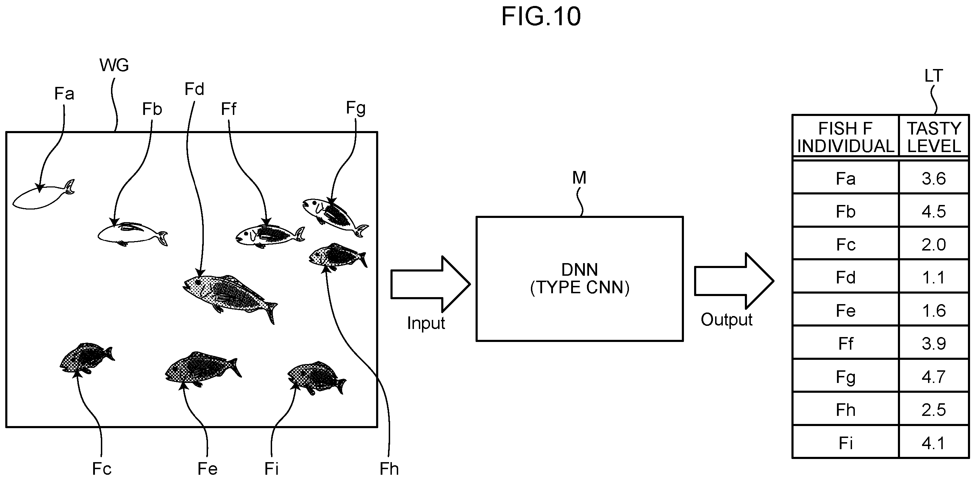

Here, FIG. 10 is a diagram illustrating an example of the list LT in which the tasty levels are displayed in a list manner. In FIG. 10, a case is illustrated in which the list LT is generated from the output information that is given by the model M when the underwater image WG is given as input.

In the example illustrated in FIG. 10, when the underwater image WG is input to the model M, the fish F that are included in the underwater image WG are identified, and the tasty level is estimated for each of the identified individuals. In FIG. 10, nine fish F (that is, fish Fa to fish Fi) are identified as the fish F that are included in the underwater image WG, and the tasty level is estimated for each of the fish F. In this case, as illustrated in FIG. 10, the output control unit 135 may generate the list LT in which the tasty level as the estimation result is associated with each of the fish Fa to the fish Fi.

Furthermore, the example is not limited to the above, and the output control unit 135 may generate information on a percentage distribution such that the fish F with the tasty level of "0.0" to "smaller than 1.0" is "2%", the fish F with the tasty level of "1.0" to "smaller than 2.1" is "6%", ..., and the fish F with the tasty level "equal to or larger than 4.0" is "80%" based on the tasty level of each of the fish Fa to the fish Fi, and output the information.

### [6. Release of restrictions]

In one embodiment as described above, the example has been described in which the information processing according to one embodiment is implemented by the system 1 that includes the first training apparatus 10, the second training apparatus 20, and the information processing apparatus 100. However, the first training apparatus 10, the second training apparatus 20, and the information processing apparatus 100 may be combined arbitrarily in accordance with operation.

For example, a single apparatus in which the first training apparatus 10, the second training apparatus 20, and the information processing apparatus 100 are combined may be configured as an information processing apparatus according to one embodiment. As another example, an apparatus in which the first training apparatus 10 and the information processing apparatus 100 are integrated may be configured as an information processing apparatus according to one embodiment. As still another example, an apparatus in which the second training apparatus 20 and the information processing apparatus 100 are integrated may be configured as an information processing apparatus according to one embodiment. Furthermore, the first training apparatus 10 and the second training apparatus 20 may be integrated.

### [7. Hardware configuration]

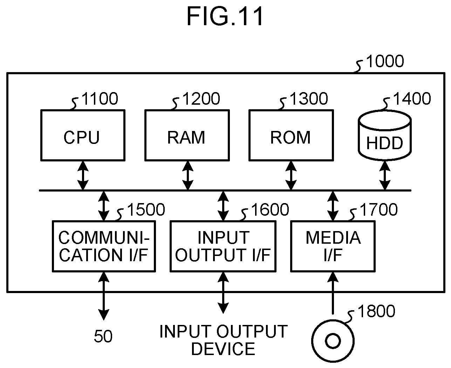

The information processing apparatus 100 according to one embodiment as described above is implemented by, for example, a computer 1000 that is configured as illustrated in FIG. 11. FIG. 11 is a diagram illustrating an example of a hardware configuration of a computer that implements the functions of the information processing apparatus 100. The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, and the like.

The HDD 1400 stores therein a program that is executed by the CPU 1100, data that is used by the program, and the like. The communication interface 1500 receives data from a different apparatus via a communication network 50, sends the data to the CPU 1100, and transmits data that is generated by the CPU 1100 to a different apparatus via the communication network 50.

The CPU 1100 controls an output device, such as a display or a printer, and an input device, such as a keyboard or a mouse, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the information processing apparatus 100 according to one embodiment, the CPU 1100 of the computer 1000 executes a program that is loaded on the RAM 1200 and implements the functions of the control unit 130. Further, the HDD 1400 stores therein data in the storage unit 120. The CPU 1100 of the computer 1000 reads the programs from the recording medium 1800 and executes the programs; however, as another example, it may be possible to acquire the programs from a different apparatus via the communication network 50.

### [8. Others]

The components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions.

### [9. Conclusion]

While one embodiment of the present application has been described in detail above based on some drawings, the embodiment is described by way of example, and the present invention may be embodied in different modes with various changes and modifications based on knowledge of a person skilled in the art, including the modes described in the section of the disclosure of the present invention. Reference Signs List

- 1: system
- 10: first training apparatus
- 13a: acquisition unit
- 13b: training unit
- 13c: transmission unit
- 20: second training apparatus
- 23a: acquisition unit
- 23b: training unit
- 23c: transmission unit
- 100: information processing apparatus
- 120: storage unit
- 121: pseudo data storage unit
- 122: CG image data storage unit
- 123: model data storage unit
- 130: control unit
- 131: reception unit
- 132: first generation unit
- 133: second generation unit
- 134: estimation unit
- 135: output control unit

## Claims

1. An information processing program that causes a computer to execute a process comprising:
a first generation step of generating image data in which estimation target predetermined fish that has a certain characteristic corresponding to an evaluation value is reproduced, by machine learning that is based on a real image that is an image in which the predetermined fish is captured and to which the evaluation value of the predetermined fish is added;
a second generation step of generating a Computer Graphics (CG) image in which the predetermined fish is reproduced by computer graphics based on the image data; and
an estimation step of estimating an evaluation value of the predetermined fish that appears in an input image based on a model that is trained by using, as training data, a combination of the CG image and the evaluation value that is indicated by a characteristic of the predetermined fish that is reproduced in the CG image.

2. The information processing program according to claim 1, wherein the first generation step includes generating the image data based on a model that is trained with respect to a feature such that, as a feature corresponding to an evaluation value of the predetermined fish that appears in the real image, a difference from any of a color, a shape, a size, a weight, and a fat percentage of the predetermined fish is minimized.

3. The information processing program according to claim 2, wherein the second generation step includes generating a CG image in which a result of a simulation of how the predetermined fish looks with respect to a three-dimensional model that is for the predetermined fish and that is based on the image data is reproduced by computer graphics.

4. The information processing program according to claim 3, wherein the second generation step includes generating a CG image in which a result of a simulation of a video of the predetermined fish that is present underwater is reproduced by computer graphics based on parameter information.

5. The information processing program according to claim 4, wherein the parameter information is one of a color of the predetermined fish with a light attenuation rate according to a water depth taken into account and a degree of reflection of light from the predetermined fish.

6. The information processing program according to claim 1, wherein the estimation step includes inputting an underwater image in which a state of the predetermined fish swimming underwater is captured as the input image to the model, and estimating an evaluation value of each of the predetermined fish included in an underwater image based on output information that is given by the model.

7. The information processing program according to claim 1, wherein the evaluation value is an evaluation value that represents a tasty level of the predetermined fish by a value.

8. An information processing apparatus comprising:
a first generation unit that generates image data in which estimation target predetermined fish that has a certain characteristic corresponding to an evaluation value is reproduced, by machine learning that is based on a real image that is an image in which the predetermined fish is captured and to which the evaluation value of the predetermined fish is added;
a second generation unit that generates a Computer Graphics (CG) image in which the predetermined fish is reproduced by computer graphics based on the image data; and
an estimation unit that estimates an evaluation value of the predetermined fish that appears in an input image based on a model that is trained by using, as training data, a combination of the CG image and the evaluation value that is indicated by a characteristic of the predetermined fish that is reproduced in the CG image.

9. An information processing method that is implemented by a computer, the information processing method comprising:
a first generation step of generating image data in which estimation target predetermined fish that has a certain characteristic corresponding to an evaluation value is reproduced, by machine learning that is based on a real image that is an image in which the predetermined fish is captured and to which the evaluation value of the predetermined fish is added;
a second generation step of generating a Computer Graphics (CG) image in which the predetermined fish is reproduced by computer graphics based on the image data; and
an estimation step of estimating an evaluation value of the predetermined fish that appears in an input image based on a model that is trained by using, as training data, a combination of the CG image and the evaluation value that is indicated by a characteristic of the predetermined fish that is reproduced in the CG image.
